# EUROPÄISCHE PATENTANMELDUNG

(11) **EP 1 142 804 A2**
(43) Veröffentlichungstag der Anmeldung: **10.10.2001**
(21) Anmeldenummer: 01108560.2
(22) Anmeldetag: 05.04.2001
(51) Int. Cl.: B65G 1/137

(54) **System und Verfahren zur Lagerhaltung**

(30) Priorität: 07.04.2000 DE 10017420
(71) Anmelder: TBN IDENTIFIKATION UND NETZWERKE GMBH, 40724 HILDEN (DE)
(72) Erfinder: HONTZSCH, Wilfried, 40721 Hilden (DE)
(74) Vertreter: Weber, Dieter, Dr.

(57) **Zusammenfassung**

Die vorliegende Erfindung betrifft ein System für die Lagerhaltung unterscheidbarer Gegenstände, bei welchem die Gegenstände durch Transporteinrichtungen (1) an einen Ablageplatz (2) innerhalb eines Lagers transportiert und dort abgelegt werden, wobei der Lagerplatz erfaßt und registriert wird. Um ein Lagersystem zu schaffen, das Fehlerquellen aufgrund versäumter oder falscher Eingaben weitgehend ausschließt, wird erfindungsgemäß vorgeschlagen, daß die Gegenstände oder Gruppen von Gegenständen und/oder deren Verpackung oder Träger (3) mit einer automatisch lesbaren Identifikationseinrichtung (4) versehen sind, daß die Transportwege (5) des Lagers ebenfalls mit Identifikationseinrichtungen (6) versehen sind, und daß die Transporteinrichtungen (1) mindestens eine automatische Leseeinrichtung (7) aufweisen, welche beim Ablegen von Gegenständen bzw. deren Verpackung oder Träger (3) mindestens die letzte vor dem Ablageplatz (2) passierte Identifikationseinrichtung (6) der Transportwege (5), sowie die Identifikationseinrichtung (4) der abzulegenden Gegenstände erfaßt und an eine Speichereinrichtung (8) übermittelt, wobei die Identifikationseinrichtungen (4, 6) bzw. die dadurch identifizierten Gegenstände sowie der Ablegeplatz (2) einander zugeordnet werden.

## Beschreibung

Die vorliegende Erfindung betrifft ein System für die Lagerhaltung unterscheidbarer Gegenstände, bei welchem die Gegenstände durch Transporteinrichtungen an einen Ablageplatz innerhalb eines Lagers transportiert und dort abgelegt werden, wobei der Lagerplatz erfaßt und registriert wird.

Trotz eines nach wie vor anhaltenden Trends, Lager- und Vorratshaltung auf ein unbedingt notwendiges Maß zu beschränken und Vorprodukte und Zulieferteile für komplexere, industriell hergestellte Gegenstände möglichst produktions- und zeitnah zu liefern, damit eine große Lagerhaltung vermieden werden kann, gibt es nach wie vor viele Bereiche, in denen eine umfangreiche Lagerhaltung unumgänglich ist, insbesondere wenn Zulieferteile nur schubweise geliefert werden können, wenn es Schwankungen in der Produktionsgeschwindigkeit gibt oder wenn gegebenenfalls auch Ausfallzeiten und Unsicherheiten in der Zulieferung überbrückt werden sollen. Auch Großhandelsunternehmen, die eine Vielzahl von Produkten an Einzelhändler oder kleinere Produzenten liefern, müssen ihre Produkte notwendigerweise in relativ großen Lagern bereithalten. Dabei geht jedoch das Bestreben dahin, die Lagerverwaltung einschließlich Bestückung und Auslieferung mit möglichst wenig Personal und auf einer möglichst geringen Grundfläche zu bewerkstelligen.

Während in früheren Zeiten Lager oft sehr ausgedehnt waren und mit einem großen Personalbestand ausgestattet waren, so daß es ohne weiteres möglich war, Zuständigkeiten zu kleineren Lagerbereichen einzelnen Personen zuzuordnen, ist dies z. B. bei einem modernen Hochregallager weder notwendig noch erwünscht. Auch bei älteren Lagersystemen war es selbstverständlich notwendig und üblich, die konkret gelagerten Gegenstände und den genauen Ort ihrer Ablage zu erfassen und zu notieren, sei es in Lagerbüchern oder sei es, wie es in der Zwischenzeit im allgemeinen üblich ist, in Computersystemen.

Dabei kommt jedoch der Pflege des Datenbestandes in dem gesamten Lagersystem eine Schlüsselrolle zu. Damit die Lagerbestände immer richtig erfaßt werden, die Lager gegebenenfalls rechtzeitig aufgefüllt werden und auch eine dauerhafte Kontrolle über den Ist-Bestand und/oder über etwaigen Schwund (Diebstahl) möglich ist, ist es erforderlich, daß das mit der Lagerverwaltung beauftragte Personal alle Lagerbewegungen, d. h., das Lagern neuer Gegenstände und die Ausgabe gelagerter Gegenstände ebenso wie den Ort der Ablage und Entnahme sorgfältig und genau in den Computer eingibt. Auch wenn nur vereinzelt entsprechende Eingaben vergessen werden, führt dies bereits bei relativ kurzer Zeit zu einem Zustand, in welchem der Ist-Bestand von Gegenständen von dem in einem Computersystem gespeicherten Soll-Zustand erheblich abweicht, was sehr leicht zu Falschlieferungen und insbesondere zu Lieferverzögerungen führen kann.

Besonders problematisch und schwierig wird dies, wenn verschiedene gelagerte Gegenstände äußerlich nur schwer unterscheidbar sind, auch wenn sie sich hinsichtlich ihres Materials bzw. der Materialqualität unterscheiden, womöglich aber die gleiche Farbe und Form haben wie Gegenstände aus anderen Materialqualitäten.

Dies gilt z. B. für Metall- und Kunststoffhalbzeuge, wie z. B. Rohre, Profile und Bleche bzw. Platten, die in sehr unterschiedlichen Materialqualitäten und -zusammensetzungen hergestellt sein können, ohne sich äußerlich deutlich sichtbar zu unterscheiden.

Gerade bei solchen Produkten ist eine sorgfältige Pflege des Datenbestandes unumgänglich, weil selbst bei einer gründlichen Inventur der Datenbestand nicht ohne weiteres aktualisiert werden kann, ohne die einzelnen, gelagerten Gegenstände genau zu untersuchen. Bei modernen Hochregallagern mit geringem Personalbestand ist aber eine solche aufwendige Inventur in der Praxis kaum, jedenfalls nicht in kurzen Zeitabständen, durchführbar.

Gegenüber diesem Stand der Technik liegt der vorliegenden Erfindung die Aufgabe zugrunde, ein Lagersystem zu schaffen, das Fehlerquellen aufgrund versäumter oder falscher Eingaben weitgehend ausschließt..

Diese Aufgabe wird durch ein System mit den Merkmalen des Anspruchs 1 der vorliegenden Anmeldung gelöst. Demnach ist das eingangs genannte System dadurch gekennzeichnet, daß die Gegenstände oder eine Gruppe von Gegenständen und/oder deren Verpackung oder Träger (Palette) mit einer automatisch lesbaren Identifikationseinrichtung versehen, wobei alle möglichen Transportwege innerhalb des Lagers ebenfalls mit Identifikationseinrichtungen versehen sind, wobei weiterhin die vorhandenen Transporteinrichtungen jeweils mindestens eine automatische Leseeinrichtung aufweisen, welche beim Lagern von Gegenständen mindestens die letzte der vor einem Ablageplatz passierten Identifikationseinrichtungen der Transportwege sowie die Identifikationseinrichtungen der abgelegten Gegenstände bzw. deren Verpackung erfaßt und automatisch an eine Speichereinrichtung übermittelt, wobei die Identifikationseinrichtungen des Ablageplatzes und die Identifikationseinrichtungen der Gegenstände einander zugeordnet werden. Damit sind die Gegenstände automatisch einem bestimmten Ablageplatz zugeordnet und bei der Entnahme der Gegenstände aus dem Lager werden wiederum die Identifikationseinrichtungen des Ablageplatzes und der Gegenstände selbst automatisch erfaßt, so daß auf die Weise auch die Entnahme der Gegenstände aus dem Lager in einem entsprechenden Lagerverwaltungssystem automatisch registriert wird.

Mit anderen Worten, es bedarf keinerlei Eingaben durch Personal, um den Lagerbestand zu aktualisieren. Statt dessen erhält das Lagerpersonal, soweit überhaupt benötigt, einfach die Anweisung, einen bestimmten Gegenstand oder bestimmte Gegenstände in dem Lager abzulegen bzw. aus dem Lager zu entnehmen. Das Lagerverwaltungssystem enthält eine vollständige Übersicht sämtlicher Ablageplätze und dirigiert die Transporteinrichtung zum Ablegen von Gegenständen an einen entsprechenden freien Ablageplatz. Im Falle der Entnahme wird die Transporteinrichtung an den Ablageplatz dirigiert, wo gemäß eindeutiger Zuordnung zwischen den Identifikationseinrichtungen der Gegenstände und Ablageplätzen die entsprechenden Gegenstände gelagert werden. Die Transporteinrichtungen müssen dabei nicht notwendigerweise von Personen gesteuert werden, sondern es kann sich insbesondere auch um automatisch gesteuerte Transporteinrichtungen handeln. Der Unterschied zwischen Ablegen von Gegenständen und Entnahme von Gegenständen ergibt sich schon aus dem an die Transporteinrichtung gegebenen Befehl, kann aber ebenfalls automatisch durch die Gewichtsveränderung erfaßt werden, welche die Transporteinrichtung beim Ablegen oder Aufnehmen von Gegenständen erfährt. Außerdem ergibt sich das Ablegen bzw. Aufnehmen von Gegenständen automatisch daraus, daß im Falle des Ablegens die Identifikationseinrichtung der Gegenstände vor dem Erreichen des Ablageplatzes erfaßt wird und sich anschließend außerhalb des Erfassungsbereiches einer entsprechenden Leseeinrichtung befindet, während es beim Entnehmen von Gegenständen aus dem Lager gerade umgekehrt ist.

Bevorzugte Ausgestaltungen der vorliegenden Erfindung ergeben sich aus den abhängigen Ansprüchen. Danach ist insbesondere vorgesehen, daß die Transporteinrichtungen selbst Speichereinrichtungen aufweisen, d. h., daß eine Speichereinrichtung in eine Transporteinrichtung integriert ist. In dieser können die Daten, d. h. die Zuordnung von Identifikationseinrichtungen und Ablageplätzen und die Tatsache der Entnahme oder Ablage zumindest zwischengespeichert werden.

Zweckmäßigerweise haben die Transporteinrichtungen mindestens zwei Leseeinrichtungen, die so angeordnet sind, daß eine der Leseeinrichtungen Identifikationseinrichtungen der Transportwege leicht erfassen kann, während die andere Leseeinrichtung so angeordnet ist, daß sie Identifikationseinrichtungen der Gegenstände leichter erfassen kann.

Wenn z.B. die Transporteinrichtung ein Gabelstapler oder ein anderes Stapelgerät mit einer Greifeinrichtung oder dergleichen ist, so kann eine Leseeinrichtung im Bodenbereich des Fahrzeuges angeordnet sein, so daß es im Boden der Transportwege eingelassene Identifikationseinrichtungen automatisch erfaßt, während eine weitere Leseeinrichtung im Bereich von Gabeln oder Greifeinrichtungen angeordnet sein kann und damit die Identifikationseinrichtungen der einzelnen Gegenstände automatisch erfaßt.

An einem Lagerplatz können Identifikationseinrichtungen auch in unterschiedlicher Höhe angeordnet sein. Z. B. können in einem Hochregal die einzelnen übereinander angeordneten Regelfächer jeweils eine eigene Identifikationseinrichtung aufweisen, die man zweckmäßigerweise der Gruppe der Identifikationseinrichtungen der Transportwege zuordnet. Für die Transportwege ergibt sich dann ein dreidimensionales Koordinatensystem, z. B. aus längsverlaufenden und querverlaufenden Transportwegen und aus einer Höhenkoordinate entsprechend der jeweiligen Regalfachhöhe. Dabei kann es sinnvoll sein, wenn eine Transporteinrichtung auch eine dritte Leseeinrichtung für die vertikal übereinander angeordneten Identifikationseinrichtungen aufweist.

Alternativ können allerdings die Transporteinrichtungen auch mit einer anderen Erfassungseinrichtung ausgestattet sein, welche die Höhe von Greifern oder Gabeln automatisch und gegebenenfalls auch kontinuierlich erfaßt und in digitale, speicherbare Daten umwandelt, die dann zusätzlich zu den Daten der Identifikationseinrichtung den entsprechenden Gegenständen zugeordnet werden.

Zweckmäßigerweise sind Identifizierungseinrichtungen der Transportwege auf allen Kreuzungen von in Längs- und Querrichtung verlaufenden Transportwegen angeordnet, und zwar vorzugsweise so, daß die Identifizierungseinrichtung bei jedem Passieren einer solchen Kreuzung von der zugehörigen Leseeinrichtung einer Transporteinrichtung erfaßt wird. Bei Bedarf können auch mehrere Identifizierungseinrichtungen an diesen Kreuzungspunkten von in Längs- und Querrichtung verlaufenden Transportwegen vorgesehen sein, um sicherzustellen, daß jedes in irgendeiner Richtung über diese Kreuzung fahrende Transportfahrzeug mindestens eine der Identifizierungseinrichtungen erfaßt.

Sinnvollerweise ist ein Speicher- und/oder eine Verarbeitungseinrichtung zentral angeordnet und erfaßt und sammelt alle Daten, die primär von den Transporteinrichtungen bzw. den an einer solchen Transporteinrichtung angeordneten Leseeinrichtungen erfaßt, gegebenenfalls zwischengespeichert und schließlich an die zentrale Verarbeitungseinrichtung übermittelt werden. Dies kann drahtlos geschehen, bei Bedarf aber auch über direkte Verbindungen zwischen den Transporteinrichtungen und den Speichereinrichtungen, die z. B. nach Abschluß einer Schicht über eine direkte Kabelverbindung miteinander in Kontakt treten können, um die während der Schicht erfaßten Daten zu übermitteln.

Hinsichtlich des entsprechenden Verfahrens zum Betrieb eines Lagersystems, wird die der Erfindung zugrundeliegende Aufgabe dadurch gelöst, daß die Daten über Transportwege und Ablageplätze für Gegenstände ebenso wie über die Gegenstände selbst automatisch erfaßt und gespeichert werden und daß die Daten der Lagerplätze und der Gegenstände einander zugeordnet werden und jederzeit abrufbar sind.

Weitere Vorteile, Merkmale und Anwendungsmöglichkeiten der vorliegenden Erfindung werden deutlicher anhand der folgenden Beschreibung einer bevorzugten Ausführung und der dazugehörigen Figuren. Es zeigen:
- Figur 1: eine schematische Übersicht über ein komplettes Lagersystem,
- Figur 2: eine schematische Darstellung der Erfassung und Identifizierung von Lagerpaletten und
- Figur 3: ein Datenblatt für bestimmte Gegenstände und die schematische Wiedergabe eines Ablegeplatzes im Lager.

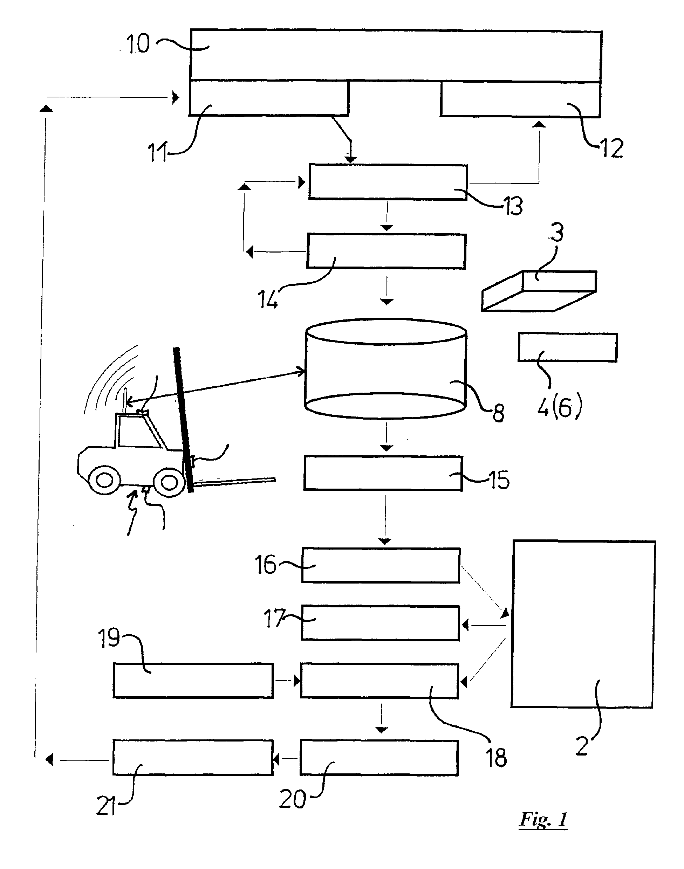

Figur 1 ist ein Flußdiagramm, welches schematisch ein Speicherverwaltungssystem und verschiedene Arbeitsläufe in diesem Speicherverwaltungssystem wiedergibt.

Block 10 bezeichnet allgemein ein Organisationsprogramm, welches neben einem Speicherverwaltungssystem auch noch weitere Betriebsabläufe steuern und verwalten kann. Mit Block 11 ist eine Auftragsbearbeitung bezeichnet und Block 12 ist im wesentlichen ein Speicher, aus dem sich der Bestand insgesamt hergestellter Gegenstände ergibt. Block 13 könnte z. B. einer Fertigungssteuerung bzw. einem Leitstand eines Produktionsbetriebes entsprechen, von welchem aus Fertigungsaufträge an einen Produktionsbereich erteilt werden. Der Block 14 entspricht der Betriebsdatenerfassung in einem Produktionsbereich. Von dort werden, wie durch Pfeile angedeutet, die produzierten Gegenstände an den Leitstand 13 zurückgemeldet und von dort wiederum wird der Bestand der gefertigten Gegenstände in den Speicher 12 eingegeben.

Die im Produktionsbereich hergestellten Gegenstände werden z. B. zu größeren Einheiten auf Paletten 3 verpackt und die Bereitstellung einer Palette 3 wird an eine Datenbank 8 übermittelt, die separat oder von dem Organisationsprogramm 10 verwaltet werden kann. Die Datenbank 8 bzw. deren Peripherie steht mit Transporteinrichtungen 1, die hier schematisch als Gabelstapler dargestellt sind, in Funkverbindung, wie durch eine Antenne und einen Doppelpfeil angedeutet wird. Die Transporteinrichtung 1 weist insgesamt drei an verschiedenen Stellen angeordnete Leseeinrichtungen 7 auf, von denen eine am Boden des Gabelstaplers 1 angeordnet ist, eine im Gabelbereich und mit der Gabel vertikal bewegbar und eine dritte im Dachbereich des Gabelstaplers angeordnet ist, die aber wahlweise auch an dem vertikalen Gabelträger angeordnet sein kann oder aber lediglich ein Wandler sein muß, der die vertikale Gabelposition erfaßt.

Die Leseeinrichtungen 7 melden jeden von ihnen erfaßten Transponder 4, 6 an den Lagerverwaltungsspeicher 8. Sobald eine Palette 3 aus dem Produktionsbereich 14 übernommen wurde, wird ein an der Palette 3 angeordneter Transponder 4 von der Leseeinrichtung 7 im Gabelbereich des Gabelstaplers 1 erfaßt und gemäß Block 15 in das Lager transportiert. Dabei wurde die Palette 3 im Produktionsbereich 14 mit einem Transponder versehen, der die auf die Palette 3 geladenen Gegenstände eindeutig identifiziert und in dem Bestandsspeicher 12 erfaßt ist.

Nach der Übernahme der Palette 3, der Identifizierung der Palette 3 und damit der Gegenstände und der Rückmeldung von dem Gabelstapler 1 an die Lagerverwaltungseinheit 8 transportiert der Gabelstapler 1 die Palette 3 an einen beliebigen bzw. von der Lagerverwaltungseinheit 8 vorgegebenen Lagerplatz in dem Lager 2. Dabei überfährt der Gabelstapler 1 eine Reihe von Transpondern, die im Bodenbereich der Transportwege des Lagers eingelassen sind und die von der Leseeinrichtung 7 an der Unterseite des Gabelstaplers erfaßt werden. Gemäß Block 16 erfolgt dann die Einlagerung in dem Blocklager 2, wobei der Transponder der Palette 3 den Erfassungsbereich der Leseeinrichtung 7 an der Gabel verläßt. Dadurch wird über die Antenne des Gabelstaplers eine Rückmeldung an die Lagerverwaltungseinheit 8 ausgelöst, die aufgrund der letzten Positionsmeldungen nunmehr erkennt, an welcher Stelle die Palette 3 abgelegt wurde. Bock 17 deutet die Situation an, in welcher Gegenstände von einem Lagerplatz an einen anderen umgelagert werden. Auch dabei werden die Gegenstände über die Leseeinrichtung 7 an der Gabel erfaßt, ebenso wie die Entnahmeposition und die neue Lagerposition. Block 18 deutet eine Auslieferung bzw. Entnahme aus dem Lager 2 an. Eine entsprechende Anforderung erfolgt gemäß Block 19, und in Block 20 wird erfaßt, daß die Palette 3 in den Auslieferungsbereich gefördert wurde. In dem Auslieferungsbereich erfolgt gemäß Block 21 noch der Ausdruck eines Lieferscheins und eine Rückmeldung an den Block 11, der die Auftragsverarbeitung überwacht. In der Lagerverwaltungseinheit 8 wird dann ebenfalls registriert, daß die Gegenstände, die sich auf der Palette 3 befanden, ausgeliefert wurden und die Bestandsführung in Block 12 wird entsprechend aktualisiert. Die gesamte Bestandserfassung und Lagerverwaltung ist damit vollständig automatisiert und es bedarf keiner weiteren Dateneingaben, Notizen oder sonstiger Tätigkeiten durch Personal, um den aktuellen Lagerbestand und den Lagerort bestimmter Gegenstände zu erfassen. Die Produktion in Block 14 wird dem Bedarf und dem Lagerbestand jeweils angepaßt.

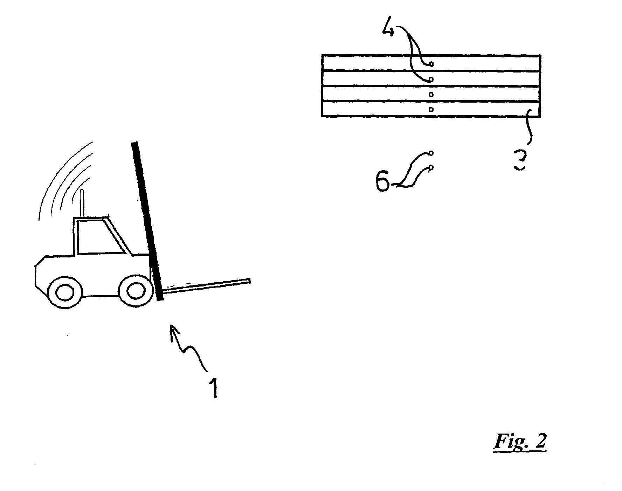

Figur 2 deutet an, wie Transponder 6 im Bodenbereich auf den Transportwegen angeordnet sind und wie weitere Transponder 4 an der Frontseite von Paletten 3 angeordnet werden, so daß die Transponder immer eindeutig von den Leseeinrichtungen 7 erfaßt werden und damit sowohl die Gegenstände als auch ihre Position eindeutig und automatisch erkannt wird.

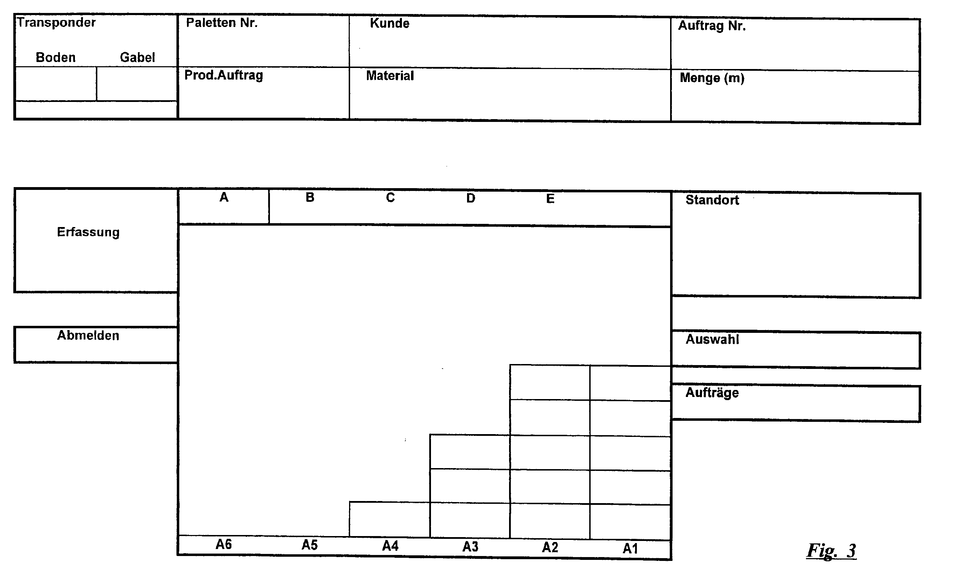

Figur 3 zeigt ein Datenblatt, welches wahlweise auch als Bildschirmmaske darstellbar ist, auf welcher alle Informationen zu gelagerten Gegenständen übersichtlich dargestellt werden. Transponder im Bodenbereich geben den Lagerplatz eindeutig an und der Transponder im Gabelbereich identifiziert die Gegenstände bzw. die Palette, auf welche die betreffenden Gegenstände gelagert sind. Daraus ergibt sich wiederum die Palettennummer und auch die Gegenstände selbst, zu denen gegebenenfalls noch eine Auftragsnummer, ein Kunde, das konkrete Material und die Menge erfaßt und abgespeichert sein kann. Der untere Teil des Datenblattes gibt schematisch einen Lagerbereich in Form von Blöcken wieder, wobei hier lediglich als Beispiel insgesamt fünf verschiedene Lagerblöcke A, B, C, D und E angegeben sind und wobei ein ausgewählter Lagerblock jeweils in einem Blockcoordinatensystem wiedergegeben wird. Beispielsweise besteht der Block A aus sechs Regalen, die mit A1 bis A6 bezeichnet sind und die in unterschiedlichen Höhen aufgefüllt sind. Jedes kleine Rechteck repräsentiert ein Regelfach bzw. eine Palettenposition. Die einzelnen Positionen können z. B. durch einen Mausklick angewählt werden, um einen Auftrag für die Entnahme von Gegenständen von dieser Position oder umgekehrt auch die Ablagerung von Gegenständen an dieser Position auszulösen. Wenn die Transporteinrichtungen mit entsprechenden automatischen Steuerungssystemen ausgestattet sind, ist es sogar möglich, die Gegenstände ohne Personal an den entsprechenden Lagerstellen abzulagern oder von dort abzuholen.

## Patentansprüche

1. System für die Lagerhaltung unterscheidbarer Gegenstände, bei welchem die Gegenstände durch Transporteinrichtungen (1) an einen Ablageplatz (2) innerhalb eines Lagers transportiert und dort abgelegt werden, wobei der Lagerplatz erfaßt und registriert wird, **dadurch gekennzeichnet, daß** die Gegenstände oder Gruppen von Gegenständen und/oder deren Verpackung oder Träger (3) mit einer automatisch lesbaren Identifikationseinrichtung (4) versehen sind, **daß** die Transportwege (5) des Lagers ebenfalls mit Identifikationseinrichtungen (6) versehen sind, und **daß** die Transporteinrichtungen (1) mindestens eine automatische Leseeinrichtung (7) aufweisen, welche beim Ablegen von Gegenständen bzw. deren Verpackung oder Träger (3) mindestens die letzte vor dem Ablageplatz (2) passierte Identifikationseinrichtung (6) der Transportwege (5), sowie die Identifikationseinrichtung (4) der abzulegenden Gegenstände erfaßt und an eine Speichereinrichtung (8) übermittelt, wobei die Identifikationseinrichtungen (4, 6) bzw. die dadurch identifizierten Gegenstände sowie der Ablegeplatz (2) einander zugeordnet werden.

2. System nach Anspruch 1, **dadurch gekennzeichnet, daß** eine Speichereinrichtung (8) in die Transporteinrichtung (1) integriert ist.

3. System nach Anspruch 1 oder 2, **dadurch gekennzeichnet, daß** eine Transporteinrichtung (1) mindestens zwei Leseeinrichtungen aufweist, von denen eine so angeordnet ist, **daß** sie die entlang der Transportwege (5) positionierten Identifikationseinrichtungen (6) erfaßt, während die andere Leseeinrichtung (7) so angeordnet ist, **daß** sie die Identifikationseinrichtung (4) der Gegenstände bzw. deren Verpackung, insbesondere beim Ablegen oder Aufnehmen derselben, erfaßt.

4. System nach einem der Ansprüche 1 bis 3, **dadurch gekennzeichnet, daß** auf den Transportwegen unmittelbar vor jeder Ablegestelle eine Identifizierungseinrichtung (6) angeordnet ist.

5. System nach einem der Ansprüche 1 bis 4, **dadurch gekennzeichnet, daß** an einem Ablage-bzw. Lagerplatz (2) mehrere Identifikationseinrichtungen (4) in unterschiedlicher Höhe angeordnet sind.

6. System nach einem der Ansprüche 1 bis 5, **dadurch gekennzeichnet, daß** die Transporteinrichtungen (1) Gabelstapler oder dergleichen sind, bei welchen Leseeinrichtungen im Bereich der Unterseite sowie im Bereich der Gabeln bzw. einer anstelle von Gabeln vorgesehenen Greifeinrichtung oder dergleichen angeordnet sind.

7. System nach einem der Ansprüche 1 bis 6, **dadurch gekennzeichnet, daß** Identifizierungseinrichtungen (6) an den Kreuzungspunkten von in einer Längs- und in Querrichtung verlaufenden Transportwegen (5) angeordnet sind.

8. System nach einem der Ansprüche 1 bis 7, **dadurch gekennzeichnet, daß** Speicher- und Verarbeitungseinrichtungen an Transportfahrzeugen (1) angeordnet sind.

9. System nach einem der Ansprüche 1 bis 8, **dadurch gekennzeichnet, daß** eine Speicher- und/oder Verarbeitungseinrichtung zentral angeordnet ist und mit den Transporteinrichtungen (1) über Sender/Empfangseinrichtungen in Kommunikationsverbindung steht.

10. System nach einem der Ansprüche 1 bis 9, **dadurch gekennzeichnet, daß** die Identifikationseinrichtungen vorzugsweise passive Transponder sind.

11. System nach einem der Ansprüche 1 bis 10, **dadurch gekennzeichnet, daß** die Transporteinrichtungen (1) automatisch gesteuert sind.

12. System nach einem der Ansprüche 1 bis 11, **dadurch gekennzeichnet, daß** eine Verarbeitungseinrichtung vorgesehen ist, die ein Lagerverwaltungsprogramm aufweist, in welchem der Ablageplatz, der Lagerbereich und weitere Lagerdaten wie z. B. der Ablagezeitpunkt der gelagerten Gegenstände erfaßt und verarbeitet wird.

13. Verfahren zum Lagern und Wiederauffinden von Gegenständen in einem Lagerbereich, mit Ablageplätzen für unterscheidbare Gegenstände und mit Transporteinrichtungen, mit deren Hilfe die Gegenstände an ihren Lagerplätzen abgelegt und von diesen wieder aufgenommen werden, **dadurch gekennzeichnet, daß** die Gegenstände und der jeweilige Ablageplatz automatisch erfaßt und identifiziert werden und diese Informationen und gegebenenfalls weitere Lagerdaten in einem Speicherverwaltungssystem gespeichert werden.
